(19) **Europäisches Patentamt / European Patent Office / Office européen des brevets**

(11) **EP 1 097 363 B1**

(12) **EUROPEAN PATENT SPECIFICATION**

(45) Date of publication and mention
of the grant of the patent:
**12.12.2007   Bulletin 2007/50**

(51) Int Cl.:
*G01M 13/00* (2006.01)   *G01M 13/04* (2006.01)

(21) Application number: **99934764.4**

(22) Date of filing: **13.07.1999**

(86) International application number:
**PCT/FI1999/000620**

(87) International publication number:
**WO 2000/004361 (27.01.2000 Gazette 2000/04)**

(54) **BEARING CONDITION EVALUATION**

BEURTEILUNG DES ZUSTANDS EINES LAGERS

EVALUATION DE L'ETAT D'UN ROULEMENT

(84) Designated Contracting States:
**DE FR GB**

(30) Priority:   **15.07.1998  FI   981614**

(43) Date of publication of application:
**09.05.2001   Bulletin 2001/19**

(73) Proprietor: **ABB RESEARCH LTD.**
**8050 Zürich (CH)**

(72) Inventors:
• **MAKKONEN, Arto**
**FIN-65100 Vaasa (FI)**

• **LEHTINEN, Reijo**
**FIN-33100 Tampere (FI)**

(74) Representative: **Hjelt, Dag Silvio Hjalmar Andrea**
**et al**
**Borenius & Co Oy Ab**
**Tallberginkatu 2 A**
**00180 Helsinki (FI)**

(56) References cited:
**US-A- 4 352 293      US-A- 5 511 422**
**US-A- 5 566 092      US-A- 5 602 761**
**US-A- 5 726 905**

Description

Field of the invention

The invention relates to a method of evaluating or monitoring and analyzing the condition of a bearing or bearings enabling a relative movement e.g. between two members of a machine. The present invention relates also to an arrangement for condition evaluating of a bearing or bearings.

Background of the invention

Various kinds of machines and apparatus including a rotary or linear or other type of relative movement between two members of the apparatus are in use in different fields of industry. These include electric motors and generators, gear boxes, rotatable roll apparatus, different kinds of actuators etc. From these the electric machines, such as induction motors operating with a constant speed, are considered as the prime workhorse of today's industry. According to recent surveys, bearing faults of the electric machines are the most common cause of production disturbances and unexpected plant downtime resulting from a machine failure (bearing faults correspond to 50-55% of all machine failures, followed by various electrical faults).

In order to avoid unexpected machine breakages it is important to be able to constantly and in a reliable manner evaluate and predict the condition of the bearings of a machine. The predictive and preventive condition monitoring of e.g. rolling element bearings (rolling bearings) and electrical machines by using a vibration measurement and/or shock pulse measurement (SPM) is therefore researched actively and several methods of analyzing the vibration and/or shock pulses have been suggested and also applied.

The currently used bearing condition monitoring methods typically compare the spectrum of a vibration measurement or an envelope thereof to a reference result obtained for a machine which is working properly, i.e. does not contain damaged bearings or any other damaged components. In most cases this comparing is done by a skilled and trained expert. At present in a typical commercially available vibration monitoring solution, one normally compares power spectral density (PSD) estimates of the vibration signal or PSD estimates of the envelope of the vibration signal to a 'fingerprint PSD' of the same motor in healthy condition. In a usual approach signal powers in selected narrow frequency windows are compared to alarm levels defined by the user.

In addition to the components of the vibration spectrum, occurrences, periods and amplitudes of shock pulse measurements with specific shock pulse (SPM) sensors are also utilized as parameters which are then analyzed and from which pulses a possible damage or fault of the bearing can be determined.

Self-adjusting and learning vibration monitoring systems have also been demonstrated. Many of these systems are based on nonlinear modelling using artificial neural networks (ANN) or neuro-fuzzy systems (NFS). Typically, the system needs a learning period to estimate its internal parameters to fit to the normal vibration modes in a wide range of operating points (varying load, on-off duty cycle, etc.). After the learning period a knowledge base for different faults has been created. The system can detect a vibration that deviates from the identified normal operation, and compare that to the information contained in the knowledge base. When a new type of abnormality is detected, information thereof can be added to the system knowledge base to be able to classify similar fault symptoms in the future.

US-patent 5,602,761-A discloses an arrangement where an AR parametric model is generated once and for all in order to characterize a normal machine condition. During operation data is collected from the machine and fit to the AR model. An exponentially weighed moving average is derived in order to identify whether the machine is in normal state or in an abnormal state.

US-patent 5,566,092-A, again, discloses a machine diagnostic system using a data base and a learning neural network in order to detect possible physical failure conditions in the machine.

However, there are still some fundamental problems in the area of bearing condition evaluation. In general it can be said that the present vibration analyses require considerable amounts of work by dedicated experts for obtaining reliable and understandable results. And still it has been difficult to deliver reliable estimates considering the true need for maintenance and/or repair by means of the present arrangements. In most cases the end-users of the condition monitoring products are not interested to receive "too early" fault indications - a maintenance recommendation is desired only for those machines or bearings which will not operate safely over that production period which comes after the next planned production break. Unnecessary and/or too early accomplished replacements or repairs of bearings can cause significant costs and a remarkable amount of unnecessary work and downtime of the machinery.

The main problem of the above described self-adjusting systems is the lacking a priori information of faults: an occurred fault is needed from each fault type in every installation before the fault type can be identified. Faults of a new type can at most be detected, but their type or severity can not be classified. Because of this, also the estimation of actual fault severity and maintenance need is impossible. In addition, the assumption is, naturally, that the machine was undamaged and in a proper working condition during the learning period. This is not always the case in practice, e.g.

due manufacturing faults in the components of the machinery and/or incorrect assembly work.

## Summary of the invention

It is an object of the present invention to overcome the disadvantages of the prior art solutions and to provide a new type of solution for evaluating bearing condition.

An object of the present invention is to provide an evaluation method and arrangement which provide an automatically operating evaluation system.

An object of the present invention is to provide a method and arrangement by means of which the initialization procedure of an evaluation system is eased, made faster and automatized.

An object of the present invention is to provide a method and an arrangement by means of which the severity of the bearing fault can be estimated.

An object of the present invention is to provide a evaluation method and arrangement which provides clear and understandable evaluation results on basis of measurement of the acceleration of the vibration.

Other objects and advantages of the present invention will be brought out in the following part of the specification taken in conjunction with the accompanying drawings.

The objects are obtained by a method of evaluating condition of a bearing component. The method comprises steps of generating an analogue acceleration signal indicative of vibration in the bearing component, A/D converting the analogue acceleration signal to a digital acceleration signal, sampling the digital acceleration signal so as to locate parts of the digital acceleration signal resulting from a bearing fault, extracting predetermined features determined as sensitive to bearing faults from the sampled digital acceleration signal, computing possibilities for different fault types on basis of the extracted features and rules included in a knowledge base, and determining an overall condition estimate of the fault severity on basis of the computed possibilities for different fault types, which method is characterized in that the influence of any deterministic signal component is removed from the digital acceleration signal, so as to obtain a signal consisting essentially of white noise proportional to overall smoothness of the micro-structure of the bearing surface, as well as shock pulses sensitive to bearing faults.

The arrangement for evaluating condition of a bearing component comprises means for detecting and generating an acceleration signal indicative of vibration in the bearing component, converter means for converting the acceleration signal to a digital acceleration signal, processing means arranged to sample the digital acceleration signal so as to locate parts of the digital acceleration signal resulting from a bearing fault, processing means arranged to extract predetermined features sensitive to bearing faults from the sampled digital acceleration signal, a knowledge base containing empiric information of the bearing component and rules for condition analysis, processing means arranged to compute possibilities for different fault types on basis of the extracted features and the information from the knowledge base, processing means arranged to form an overall condition estimate of the fault severity on basis of the computed possibilities, and means for outputting the condition estimate, wherein the arrangement is characterized in that it further includes means for removing the influence of any deterministic signal components from the digital acceleration signal, so as to obtain a signal consisting essentially only of white noise proportienal to overall smoothness of the micro-structure of the bearing surface as well as shock pulses sensitive to bearing faults.

Several advantages are obtained by means of the present invention, since the solution provides a reliable, controllable and automatic manner for evaluating bearing condition. The solution provides a fully automatic analysis and no user or expertise intervention is required to obtain the results of the evaluation. E.g. the following fault types can be easily and reliably identified with the corresponding maintenance recommendations: defect on the inner or outer race of the bearing, defect in a rolling element, resonance or looseness in the bearing or evenly worn bearing. Also inadequate lubrication or impurities in the lubricant will be seen as defect on a roller or the bearing race. The solution provides the user with estimates of the severity of different fault types in the monitored bearing. Knowing the fault type, the inventive system can also justify the urgency of the maintenance need accordingly (some faults need quick actions, whereas some faults can be detected well in advance before developing to critical, and therefore the operation of the machinery can be continued in a normal manner or with decreased running time loading). No set-up of warning or alarm levels is required from the user side since the solution provides also automatic initialization routines. The system can be initialized also for bearings that are already damaged. In addition, no separate shock pulse sensor is needed to detect shock pulses, as is the case in many of the prior art systems.

In the following the present invention and the other objects and advantages thereof will be described in an exemplifying manner with reference to the annexed drawings, in which similar reference characters throughout the various Figures refer to similar features.

## Brief description of the drawings

Figure 1      is a schematic illustration of a possible monitoring arrangement for bearing condition evaluation;

Figure 2      discloses a flow chart for operation in accordance with the present invention;

Figure 3      is a schematic presentation of a principal frequency distribution of shock pulses;

Figure 4      discloses schematically a typical envelope auto-correlation function form for a damaged bearing component;

Figures 5a, 5b and 5c      disclose membership functions for M, $P_{peak}$ and $P_{mean}$;

Figure 6      discloses a table for fault possibilities in different fault classes;

Figure 7      discloses a block diagram for one embodiment; and

Figure 8      discloses an example of development of the diagnostic output versus time in one test case.

Detailed description of drawings

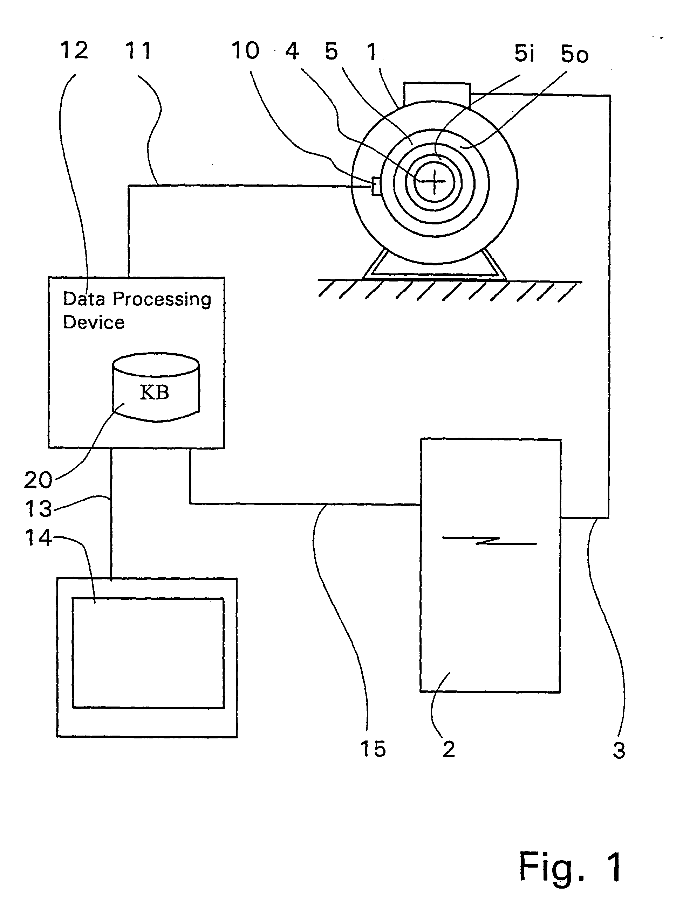

Figure 1 is a schematic presentation of one possible general arrangement for enabling the operation of a bearing condition monitoring system. The machine 1 to be monitored can be e.g. an electric induction motor, a shaft 4 thereof being arranged to operate with an essentially constant or nearly constant speed. The operation of the motor 1 is controlled by a control unit / power supply 2 via a connection 3. An electric machine, and the operation and various possibilities for power supply and control thereof are per se known to a skilled person, and are thus not explained in more detail herein. It is sufficient to note that to enable the operation of an electric motor, some kind of support bearing arrangement is required for the rotating shaft 4 thereof to enable as frictionless rotation as possible of the shaft.

Figure 1 discloses schematically a rolling bearing component 5 rotatably supporting the shaft 4. The inner race 5i and the outer race 5o of the bearing component 5 are also shown. Even though not disclosed, it is to be understood that in a usual case bearings are provided in both ends of the motor and that there are several different ways to accomplish the rotatable support by bearings for a machine. The way how the bearings are arranged between the various members of the machine, however, is not a part of the invention, and the different alternatives for the bearings are thus not discussed in more detail herein.

An acceleration detector or accelerometer 10 capable of producing an acceleration signal on basis of an acceleration measurement is mounted to the bearing 5 so as to detect the possible shocks or similar events in the bearing 5. It is to be noted that the detector 10 does not need to be directly attached on the surface of the bearing component, but that it is enough to position the detector relative to the bearing such that the detector is capable of detecting any such events in the bearing component which are determined to have a meaning when monitoring the working conditions of the bearing component.

As is known in the art, a common acceleration detector or an accelerometer transforms mechanical motion into an analogue signal proportional to the vibration acceleration of the system under detection. Most accelerometers use piezo-electric materials as a major sensing component of the transducer. The piezo-electric material forms electrical voltage proportional to the force as the atoms within the material are displaced. The produced voltage is very low and it is usually amplified with a charge amplifier to produce amplified voltage signal proportional to the acceleration. The sensitivity of an accelerometer and a charge amplifier is typically in the order of 50 - 100 mV/g.

The detector 10 is connected by an operational connection, such as e.g. a connector line 11 or radio or infrared connection, to a processing means 12 of the monitoring system. The processing means can be a data processing device comprising a central processing unit CPU (e.g. a microprocessor) and necessary memory arrangements (such as ROM and RAM) and necessary interfaces towards other apparatus included in the system. According to one embodiment the data processing device 12 comprises a personal computer (PC). The function of the processing means 12 is to accomplish the necessary evaluating operations and computations after having received the acceleration signal, as will be explained later on in this description, and therefore any apparatus providing the necessary functionality for accomplishing the required data processing and computations can be utilized in this.

It is noted that the arrangement may also be arranged to use separate processing means for the different proceedings and tasks instead of one central data processing unit. In addition, a part of the required processing means may comprise e.g. microprocessors and software implemented therein, while a part of the processing means of the same arrangement may comprise special circuitry and logical units arranged to proceed a predefined part of the functionality.

The processor unit 12 may comprise various databases for analysing, monitoring and/or controlling purposes.

An important database is a specific knowledge base 20 and/or rule base containing rules for the evaluation. These rules for the various stages of evaluation, such as stages for pre-processing and processing of an acceleration signal, analysis and estimations, will be explained in more detail later in this description.

Heuristic and empiric knowledge concerning the bearing(s) and/or machine under surveillance may also be stored in the same knowledge base 20. According to an alternative another knowledge base can be provided for the heuristic and/or empiric information. The heuristic knowledge can be defined as a linguistic description which relates or associates values or changes in some of the measured quantities or features extracted from the measurements or a combination of such values and/or changes to predefined bearing condition classes. This information may, for example, be empirical knowledge from test results, theoretically derived physical knowledge, or expert knowledge by an experienced person.

It is noted that the necessary empirical knowledge is preferably included in the system. More precisely, the knowledge can be presented as rules in the diagnostic rule base.

In addition, the processing unit 12 may comprise a data base for mean value data collected during the automatic initialization routine when the monitoring apparatus is started for the first time, e.g. during a start-up of an entirely new apparatus.

The data in the knowledge bases can be updated. The update data can be either obtained from the machine monitored by the particular processing unit, or the update data can be imported through a suitable interface. The processing unit may interface and communicate towards another data processing device or similar through a suitable bus or a local area network (LAN) or a direct connection between the processing unit 12 and another data processing device, e.g. via a serial port of the data processing device. Various alternatives for the communications between data processing devices are per se known, and are thus not explained in more detail herein.

A feed-back connection 15 is arranged between the processing unit 12 and the control or power supply unit 2 of the electric machine 1. This connection enables a direct and automatic control of the machine 1 in case of a bearing failure, e.g. an emergency shut down of the machine 1.

In addition, the exemplifying system includes a display 14 for displaying the results of the analysis, either continuously, periodically or on request. The display can be replaced or accompanied e.g. by a printer or similar output device. There may also be some other additional outputting apparatus connected to the unit 12 for informing the operators from various events in the machinery. These include alarming apparatus such as lights and buzzers or similar apparatus capable of giving a clear and noticeable signal when needed, and other user interface apparatus such as cordless alarm / display devices and means enabling the system to inform the operators e.g. by means of voice messages.

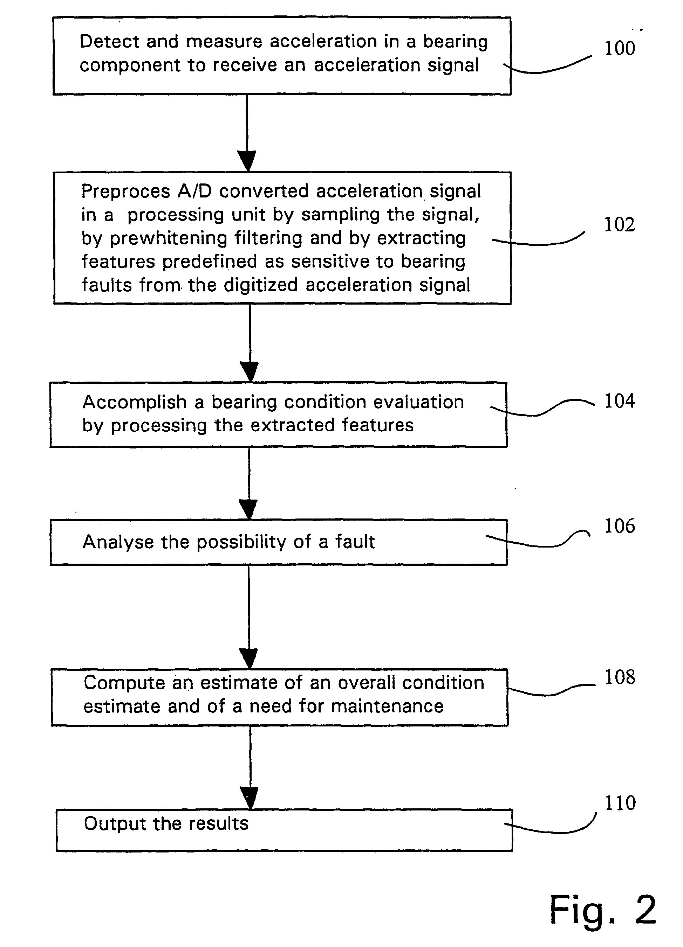

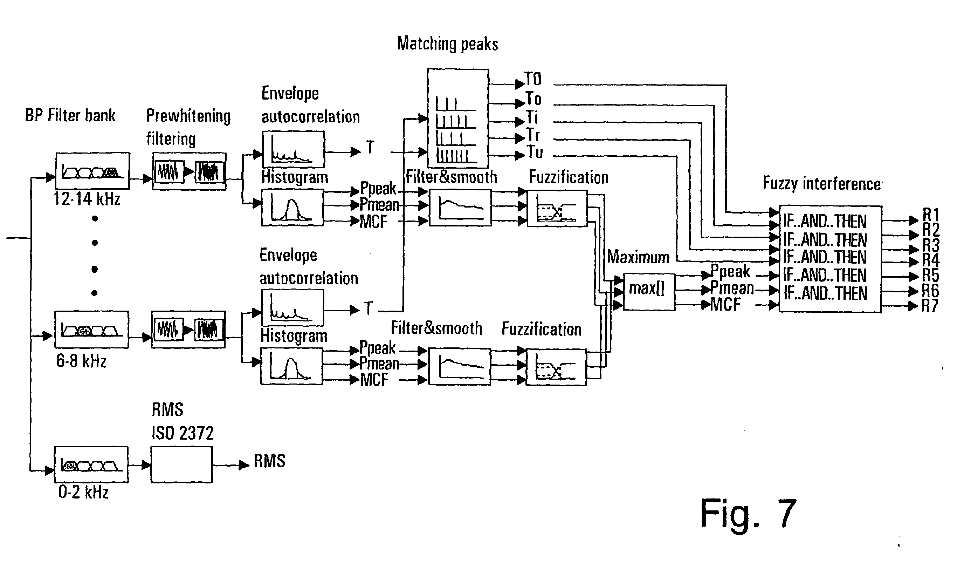

A flow chart illustrating one possible solution for operation of the evaluation arrangement is presented in Figure 2. Figure 7, in turn, shows a block diagram for the possible embodiment, disclosing the operational steps in more detail.

As disclosed by Figure 2, an acceleration signal is firstly detected / measured from the bearing under observation at step 100. At a following step 102 the signal is sampled and subsequently pre-processed so as to extract features which are sensitive to bearing faults from the acceleration signal measurement. At this stage the signal has been A/D-converted for the sampling and processing purposes, in case the signal originally was in an analogue form. It is also possible to apply a pre-whitening filtering to the signal at this stage.

At step 104 the processing of the extracted features is continued e.g. by removing the effects of any disturbances, e.g. such as detected motor stops and resonances etc., from the computed features. An averaging may also be applied to remove noise from the motor condition estimates output. The analysis is then accomplished at step 106 in a diagnostic part, and this is utilized to convert the combination of feature values to estimates of fault possibilities for each fault class. Finally, an overall condition estimate and a maintenance need estimate are computed at step 108, and the results of these are outputted and/or utilized in the overall control of the motor and the entire apparatus at step 110.

In the disclosed solution there is no need for a shock pulse measurement, but it is enough to have an acceleration measurement only. When analysing the bearing condition the system utilizes a physical model of bearing vibration and parametric models of random processes for detecting failure sensitive features from the vibration. Based on these features it is possible to count and determine how well the measured vibration signal corresponds to the theoretical appearance of the different fault types in the signal. In principle there may exist a huge amount of different fault types, but for reasons of simplicity, these can be classified into predefined number of different fault classes (one class for certain types of faults). Since the severity of different fault types or classes and the required maintenance for each of the fault types or classes is known, it is also possible to establish an overall estimate for the need of maintenance or repair on basis of the detected fault class or several classes. For the most fault classes the parameters under consideration are directly comparable to the severity of the fault or damage, whereby it is possible to detect the fault without any reference measurement to a machine in a healthy or undamaged condition.

In addition, an automatic initialization routine is provided which takes automatically into account faults which have been already detected when setting the alarming levels (threshold values for various alarms) during the initialization procedure.

A possible operation and advantages of the solution will now be described in more detail from step to step.

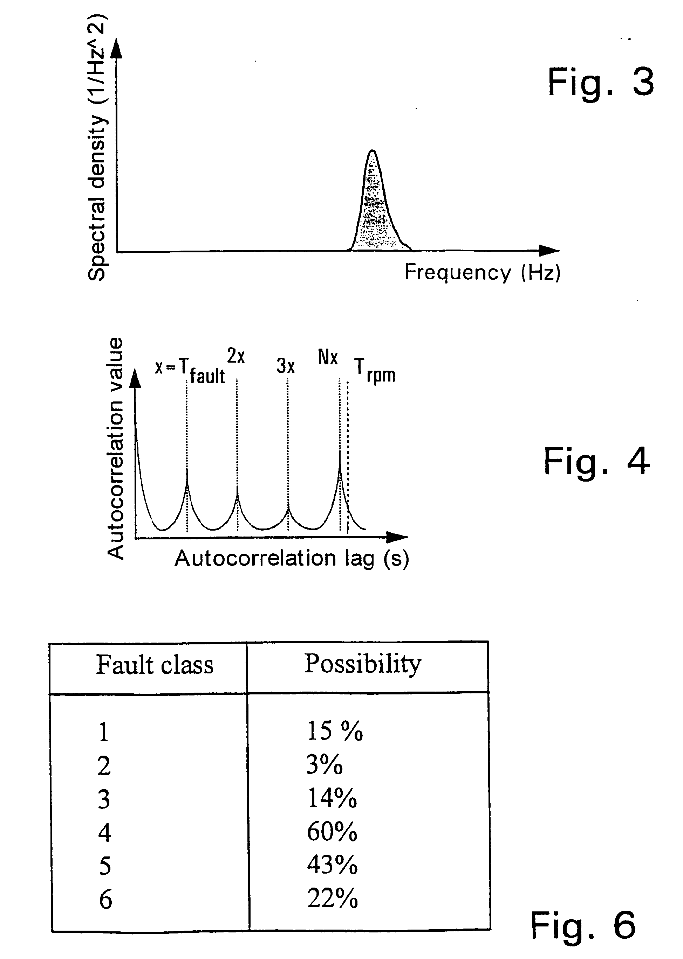

However, as the acceleration detection and measurement (step 100) by means of e.g. an acceleration detector is a well known operation in the art, it is not described in more detail, but the starting point will be the feature extraction (step 102 in Figure 2). When explaining this, a reference is made also to Figure 3 presenting a principal form for a power spectral density of a shock pulse produced by a contact between a defected rolling element bearing race and a rolling element.

The shock pulse produced by a fault is wide-bandwidth, and therefore it is not possible to present it well and precisely by a summation of sinusoidal frequency components, as is done in many of the prior art arrangements. This is one of the main reasons why the analysis of bearing faults using prior art methods based on frequency spectrum interpretation are complex, and why there is a requirement to use dedicated experts in the evaluation process.

The herein disclosed feature extraction detects the transient form of the vibration shock pulse instead of the frequency spectrum as is the case in the prior art. The feature extraction utilizes the fact that shock pulses produced by bearing faults are not periodical or sinusoidal by nature. These are not inherently suitable for analysis using Fourier spectral analysis techniques used in the majority of the prior art systems.

The following scheme can be used in the feature extraction:

1. Sample the acceleration signal with an adequately high sampling frequency ($f_s$). The interesting parts of the signal lay typically in the frequency range 6-20 kHz. The sampling frequency must be at least twice as high as is the highest frequency of the analyzed signal component. Selecting 32 kHz sampling frequency allows to analyze the frequency to up to 14 kHz and results in reduced computational effort at the later stages in the evaluation algorithm.

2. Divide the signal to several frequency bands in the frequency range of interest (see Fig. 7, in which two of the several bands are disclosed). This helps to find those signal parts that result from bearing faults by focusing on the shock pulse frequency range depicted in Figure 3. Using several frequency bands is advantageous since the exact location of the shock pulse components is not known in advance. The signal of interest may be present in some or all frequency bands in the case of a bearing fault. Division of the signal to frequency bands that multiply to the sampling frequency by a power of two results in attractive computational reductions and an effective implementation. This clarifies the selection $f_s$=32 kHz: division to the frequency bands 6-8, 8-10, 10-12 and 12-14 kHz as is disclosed by Figure 7 can be implemented very effectively. However, also other selections for $f_s$ are possible to obtain the same functionality.

3. Remove the influence of any deterministic signal components by supplementing the extraction with pre-whitening filtering in each of the frequency bands. For the details of the theory of pre-whitening, see e.g. Marple, S.L. Jr: "Digital spectral analysis with applications", Prentice Hall, Englewood Cliffs, NJ. USA 1987. The pre-whitening filtering is used to effectively remove sinusoidal signal parts. A feature of the pre-whitening filtering is that it is not sensitive to shock pulses. The resulting signal consists essentially of white noise and shock pulses only. Any pre-whitening filtering method (or a prediction error filter coefficient estimation method, or a reflection coefficient estimation method, or an auto-regressive (AR) -model parameter estimation method, which all produce a pre-whitened signal), can be utilized. The so called Burg algorithm has been selected in this example since it is computationally effective and has shown to be numerically stable.

It is preferred to use the pre-whitening when implementing the disclosed system. In view of the importance of the pre-whitening it is noted that in case the pre-whitening has not been performed, it can be shown that the auto-correlation of the signal envelope will have fluctuations when deterministic signals are present. These fluctuations, if present, would be misinterpreted as peaks resulting from a fault, and might thus in worst case lead into a false fault alarm.

It is, however, noted that also other methods than pre-whitening can be used to remove the deterministic components from the signal. One possibility is to remove deterministic peaks from the signal FFT (indicated by low ration of variance and amplitude of the spectral estimate), followed by a removal of deterministic peaks and a subsequent inverse FFT (Fast Fourier Transform). However, this may introduce some more variance into the resulting signal. An ordinary Fourier Transform can also be used instead of the FFT.

4. After the preferred filtering operations, extract features that are sensitive to bearing faults. The following features can be used in the processing unit for computations in each frequency band for the pre-whitened signal (it is to be noted that this signal is no longer the same as the measured acceleration signal, as it has passed the above filtering operations):

a) In the auto-correlation sequence of the signal envelope, sharp peaks can be detected if shock pulses appear at regular intervals. Return the time between the shock pulses as a feature, that is, return the lag value of the first sharp peak in the auto-correlation estimate of the signal envelope. A convenient means of computing the signal envelope is to utilize a complex valued Hilbert transformation filter which is a standard tool for the signal processing community.

b) From the amplitude distribution of the signal, compute percentiles (P)

$$P_n = F^{-1} \left(\frac{n}{100}\right)$$

where n denotes the desired percentile and F denotes the cumulative distribution function.

Compute now $P_1$, $P_{30}$, $P_{70}$ and $P_{99}$. Return the features to receive:

$$P_{peak} = P_{99} - P_1$$

$$P_{mean} = P_{70} - P_{30}$$

$$MCF = P_{peak}/P_{mean}$$

From the above the feature a) (or T in Figure 7) is sensitive to shock pulses with regular intervals, $P_{peak}$ describes roughly the peak-to-peak amplitude of the signal, $P_{mean}$ is proportional to the mean amplitude without the shock pulses and MCF describes the peak content of the signal.

The number and nature of the extracted features can be defined differently for different kinds of machines and/or bearings and/or applications. A possible approach might be to extract about 20 features which is considered to give reliable results in most of the applications.

In the subsequent processing and combining of the extracted features into bearing condition information the features could be combined directly to motor condition estimates by a method described later on in this description when explaining the diagnostics of the computations. However, this may lead to noisy condition estimates. To avoid this the following further processing before the actual analysis is applied to the input signals in each frequency band:

1. Convert the peak times (in seconds) to indicators describing recent match to each fault type. This procedure will be explained in more detail later on in this description.

2. Filter the features using a digital low-pass filter with the following checks:

2a: If $P_{peak}$ is very low, motor is not running. In this case, return the old filter output value (computed when the motor was running) until vibration levels indicate that the motor has been restarted. A simple limit or threshold value check can be used for this.

2b: If MCF > MCF_limit occurs in some frequency band, use the old filter output values for $P_{peak}$ and $P_{mean}$ in that frequency band until MCF returns to a normal range again. MCF_limit value 5.25 can be selected for most applications to indicate increase (theoretical MCF for the Gaussian noise is approximately 4.4).

"Cutting" the $P_{peak}$ and $P_{mean}$ by this way helps to resolve an evenly worn bearing from vibration bursts caused by resonances or looseness in the bearing. It is also essential for an automatic initialization run, as will be described later in this specification, where the separation of the resonance bursts from an increased overall vibration level is necessary.

The processing of the fault time peaks already referred to will now be explained in more detail with reference to Figure 4.

It is characteristic for each bearing component fault or lubrication related fault that they typically produce shock pulses into the vibration signal. As already proposed by the prior art, the interval between these pulses, the pulse interval, can be computed as an inverse of the so-called pulse frequency from the bearing geometry.

The pulse frequencies are, however, used in the disclosed solution only for computing the pulse interval. Furthermore, the surprising observation here is that the peaks in the auto-correlation of the signal envelope appear in different locations depending on the fault severity. Small and developing faults can be seen first close to the rotation period T_rpm of the bearing component because the shock pulse train will be modulated with the rotating frequency.

As the fault gets more severe (or increases), clear peaks can be detected closer to the fundamental pulse interval. It is possible to use different weighting for e.g. three classes of narrow auto-correlation peaks:

Class 1: Most severe: detected peak time is close to the fundamental pulse interval within a time tolerance.

Class 2: Least severe: detected peak time matches (within a certain time tolerance) the multiple of the pulse interval which is the closest to the rotating period.

Class 3: Medium severity: detected peak time matches some other multiple of the pulse interval.

The fault severity is computed for each of the bearing component fault classes. Five new features result after filtering, all having a value between 0 and 1:

$T_o$    Recent pulses match outer race fault
$T_i$    Recent pulses match inner race fault
$T_r$    Recent pulses match rolling element fault
$T_u$    Recent pulses do not match any known fault
$T_0$    No shock pulses have been detected

The filtering is performed by allowing these values to move slowly to the direction of the weighted severity of detected pulse interval. If no shock pulses (which indicate the existence of a fault or several faults) have been detected, $T_0$ will be increased and other values decreased.

Here all frequency bands are investigated to produce one set of the parameters ($T_o$, $T_i$, $T_r$, $T_u$, $T_0$). Thus, if a shock pulse has the same influence to the result, it does not matter in what frequency band it has been detected. Recalling the discussion above about the wideband nature of the shock pulse spectrum, this is a natural interpretation.

When accomplishing the diagnostics, the condition analysis in the proposed method consists of two phases:

1. Compute the possibilities of different fault types, and
2. form an overall condition estimate of the fault severity.

When computing of the possibilities of different faults the vibration analysis is completed by utilizing a heuristic expert knowledge on the exact features computed earlier. An appropriate framework for implementing the heuristic knowledge with a computer algorithm is utilization of so called fuzzy logic and fuzzy reasoning.

The use of so called fuzzy sets provides a basis for a systematic way for the manipulation of vague and imprecise concepts. In particular, the fuzzy sets can be employed to present linguistic variables and fuzzy logic can be used to transform a linguistic description of diagnostic rules to a computer algorithm.

Fuzzy logic can be defined as an extension of an ordinary, boolean logic. In fuzzy logic, the concepts 'true' and 'false' are extended to denote the "degree" of the truth. Membership functions relate a crisp variable value to a degree of membership in a fuzzy set. Equivalents to the logical operations AND, OR and NOT in the boolean algebra are also defined in the fuzzy set theory. This makes it possible to analyse mathematically a set of linguistic descriptions of rules which typically are in the form:

*if* (a set of conditions is true) *then* (a set of consequences can be inferred).

It is noted again that 'true' here means the degree of membership in the corresponding fuzzy set within the interval [0,1]. Also the consequence part or the results are given as degrees of membership in the corresponding fuzzy sets.

Now, when utilizing fuzzy logic, linguistic variables defined by fuzzy sets can be combined to produce rules for linguistic output, i.e. for an output which is in the form of an understandable writing. For example, the following linguistic variables may be used:

$T_0$ = "No shock pulses have been detected"
$T_o$ = "Recent pulses match outer race fault"
$T_i$ = "Recent pulses match inner race fault"

$T_r$ = "Recent pulses match rolling element fault"
$T_u$ = "Recent pulses do not match any known fault"
M = "MCF value has increased"
$P_{peak}$ = "$P_{peak}$ value has increased"
$P_{mean}$ = "$P_{mean}$ value has increased"

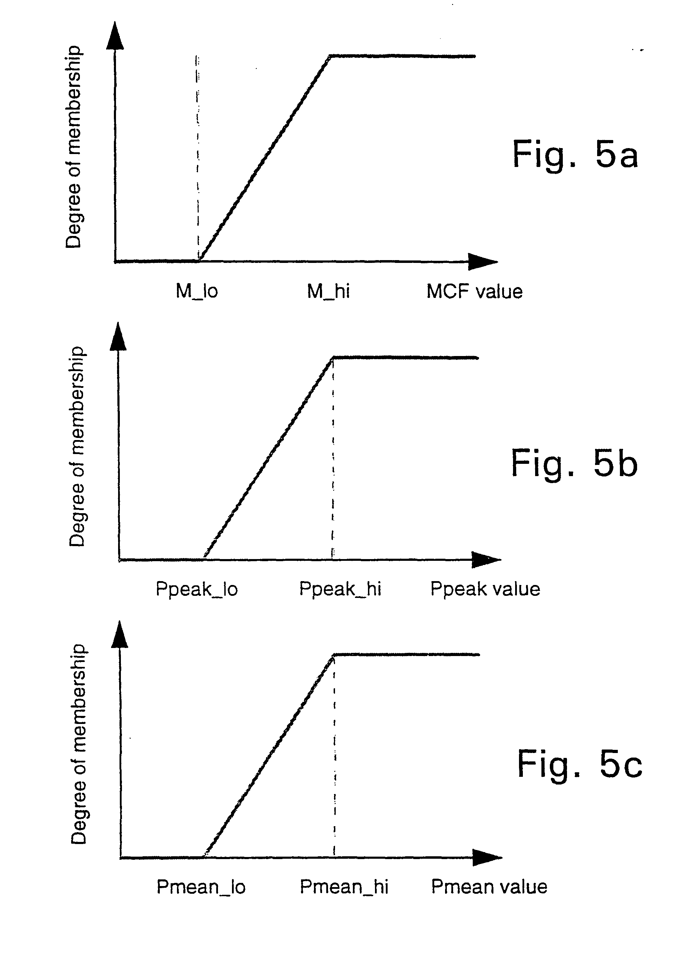

It is already described in above how $T_0$, $T_o$, $T_i$, $T_r$ and $T_u$ values are computed. These values can be interpreted as the degrees of the membership or relation to the corresponding linguistic sets. For M, $P_{peak}$ and $P_{mean}$, a standard fuzzification is used with trapezoidal membership functions as shown in Figures 5a - 5c. Trapezoidal fuzzy sets are a suitable selection since all of the features increase proportionally to the fault severity.

The values M_lo = 5 and M_hi = 10 have been selected here on the basis of the theoretical value 4.4 for Gaussian noise (the normal bearing vibration in high frequencies after a pre-whitening is typically Gaussian). MCF values up to 25 have been measured in field tests for very severe bearing fault types.

$M_{peak}$_lo, $M_{peak}$_hi, $M_{mean}$_lo and $M_{mean}$_hi are determined automatically during the initialization run separately for each of the frequency bands.

The linguistic variables for the output may be for instance (in Figure 7, these are denoted by R1, R2, .... R7, respectively):

OK = "Vibration is OK"
$F_o$ = "Fault on the outer race of the bearing"
$F_i$ = "Fault on the inner race of the bearing"
$F_r$ = "Fault on a rolling element of the bearing"
R = "Resonance or looseness"
W = "Evenly worn bearing components"
U = "Unknown fault"

The following (narrow) rules can be used to determine the condition of the bearing so as to produce the above results:

1.) IF ($P_{mean}$ OR $P_{peak}$) AND NOT M THEN W
2.) IF M AND $T_0$ THEN R
3.) IF $T_0$ AND NOT M AND NOT $P_{mean}$ AND NOT $P_{peak}$ THEN OK
4.) IF $T_u$ AND m THEN U
5.) IF M AND $T_o$ THEN $F_O$
6.) IF M AND $T_i$ THEN $F_i$
7.) IF M AND $T_r$ THEN $F_r$

The possibilities of the fault classes are determined simply by computing the rule output using fuzzy inference methods described e.g. in the literature of the art. The output gives membership value (the possibility) of each fault class between 0 and 1.

From the above rules the rule number 1.) is fully active only when the initialization routine has been successfully passed in one frequency band. Most of the bearing faults can be found also using the other rules, in which case the bearing protection system is active immediately.

Fault classes $F_o$ and $F_i$ indicate also inadequate lubrication (metal contact through the lubricating oil film) or impurities in the lubricant (small particles causing shock pulses).

The overall condition estimate, in turn, can be given by a simple limit check for the fault class possibilities. Overall status can be indicated for example by means of colour indicators: green, yellow, red. From these, green colour indicates a proper working condition, yellow a slightly damaged or less severe condition and red a severe damage.

Different limit values (between 0 and 1) for each fault can be used when computing the overall condition estimate from the fault possibilities. This way the normal looseness in certain bearing types can be tolerated without a warning or an alarm. It is also possible to react more promptly to an inner race fault, since it will be seen not as clearly as the outer race faults in the vibration signal. Different set-ups for overall alarm sensitivity can also be used according to requirements set by the user (for very critical applications, an earlier warning is desirable). After an alarm, the user can check the cause directly from the possibilities of the condition classes. Figure 6 discloses one example for a fault possibility table stored in the knowledge database of the processing means of the evaluation arrangement.

One important feature which is enabled by the solution is an automatic initialization of the condition evaluation system. The automatic initialization of $P_{peak}$_lo, $P_{peak}$_hi, $P_{mean}$_lo and $P_{mean}$_hi is performed by computing the mean value of the filtered $P_{peak}$ and $P_{mean}$ values in all frequency bands and setting the limits above the mean values:

$$P_{peak\_lo} = 2 \times E(P_{peak})$$

$$P_{peak\_hi} = 4 \times E(P_{peak})$$

$$P_{mean\_lo} = 2 \times E(P_{mean})$$

$$P_{mean\_hi} = 4 \times E(P_{mean})$$

wherein E denotes the mean value operation over a time period.

The mean or average values are computed only when the machine, such as a motor is running. A period of several days (e.g. from 3 to 7 days) is used to compute the average level of bearing vibration in the normal operating cycle of the machine.

As described earlier, an increased MCF is used to detect resonance bursts in the vibration. Measurements with a high MCF are not used in the initialization cycle, as it is required that the MCF value is normal for a sufficiently long time period during the initialization (the requirement can be for example that the MCF has to be below 5.25 for 20% of the total initialization cycle). Otherwise, initialization status "failed" will be returned for the corresponding frequency band and these frequencies will not be used for diagnostics with the rule 1.) described above.

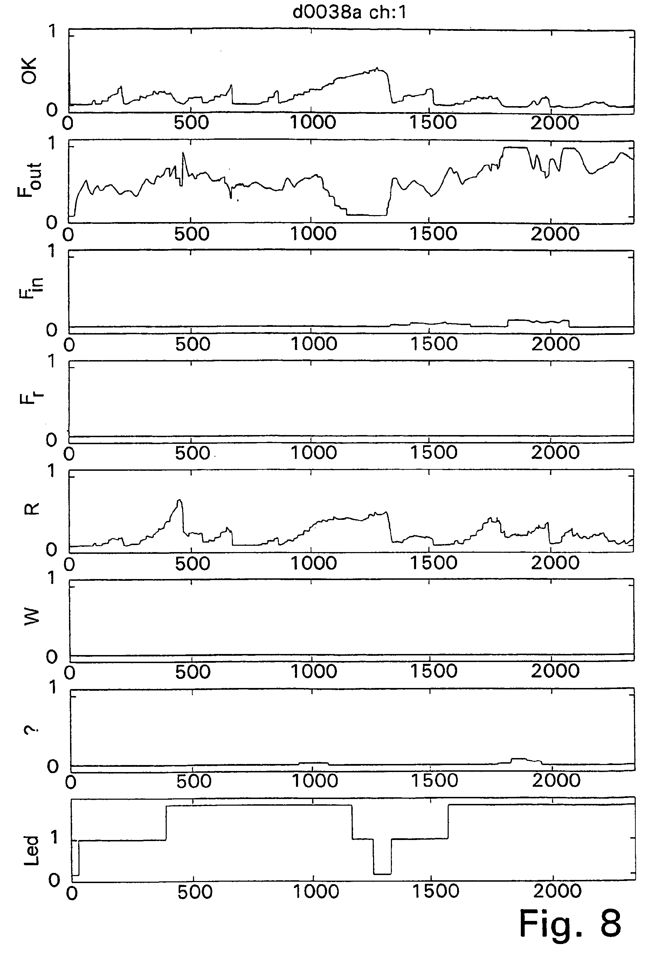

Figure 8 discloses an example of the results or output of test diagnostics. The output can be e.g. a print list on paper or a display in a screen. The vertical axis of the different curves describes the possibility for the fault in each class in a range from 0 to 1, whereas the horizontal axis defines the time. Each of the curves presents one fault or condition type.

The first curve indicates the possibility of perfectly normal vibration. A drop of the possibility from the level 1 indicates that minor declinations from normal vibration are present in the measured signal (OK). The second curve is for the outer race faults ($F_o$), and can be seen to indicate that the bearing is likely to have a fault in the outer bearing race. Similarly, the third (inner race) curve ($F_i$) and fourth (rolling elements) curve ($F_r$) show the possibilities of these fault types. Fifth curve (R) indicates the possibility of resonance or looseness in the bearing. Sixth curve (W) indicates even wear of the bearing, the possibility for this being zero. The seventh curve (U) is for "unknown fault".

Thus, the invention provides a solution by which a significant improvement can be achieved in the area of bearing condition evaluation. The arrangement according to the present invention is easy and economical to realize by components *known per se* and which are reliable in use. The disclosed system provides the user with estimates of the severity of different fault types in the monitored bearing. Knowing the fault type, the system can justify the urgency of the maintenance need accordingly, since some of the detected faults need quick actions, whereas some other fault types can be detected well in advance and followed up before they are developing to critical. No set-up of warning or alarm levels is required from the user. The system includes automatic initialization routines. The system can be initialized also for bearings that are damaged. No separate shock pulse sensor is needed to detect shock pulses.

Above some favorable embodiments of the invention have been disclosed as examples only, and for the professional it is clear that the invention can be modified also in many other ways within the scope of the appended claims.

## Claims

1. A method for evaluating the condition of a bearing component (5, 5i, 5o), comprising

generating (100) an analogue acceleration signal indicative of vibration in the bearing component (5, 5i, 5o) ;
A/D converting the analogue acceleration signal to a digital acceleration signal;
sampling (102) the digital acceleration signal so as to locate parts of the digital acceleration signal resulting from a bearing fault;
extracting (104) predetermined features determined as sensitive to bearing faults from the sampled digital acceleration signal;
computing (106) possibilities for different fault types on basis of the extracted features and rules included in a knowledge base (20); and
determining (108) an overall condition estimate of the fault severity on basis of the computed possibilities for different fault types,
**characterized in that**
the influence of any deterministic signal component is removed from the digital acceleration signal, so as to obtain a signal consisting essentially of white noise proportional to overall smoothness of the micro-structure of the bearing surface, as well as shock pulses sensitive to bearing faults.

2. A method according to claim 1, **characterized in that** the influence of any deterministic signal components is removed by means of pre-whitening filtering or similar method which utilizes parametric models of random signals, or by means of (Fast) Fourier Transformation, removal of deterministic peaks and a subsequent inverse (Fast) Fourier Transformation.

3. A method according to any of the preceding claims, **characterized in that** at least one of the following features is detected during the feature extracting stage (104): sharp vibration pulses or shock pulses, peak-to-peak amplitude of the signal, a mean value proportional to the mean amplitude without shock pulses, a peak content of the signal.

4. A method according to any of the preceding claims, **characterized in that** a narrow form of shock pulses at regular intervals is detected from a narrow peak in the auto-correlation estimate of a signal envelope.

5. A method according to claim 4, **characterized in that** the location of pulse peaks in an auto-correlation estimate of a signal envelope is used when determining the fault severity.

6. A method according to any of the preceding claims, **characterized in that** the sampling (102) occurs with a sampling frequency that is at least twice as high as the frequency of the digital signal to be sampled.

7. A method according to any of the preceding claims, **characterized by** dividing the acceleration signal into a plurality of frequency bands, wherein each of the bands is monitored separately.

8. A method according to any of the preceding claims, **characterized in that** the extracted features are processed by low-pass filtering, wherein effects of any disturbance and noise are removed from the extracted features.

9. A method according to any of the preceding claims, **characterized in that** a pulse interval is computed from the geometrical dimensions of the bearing component.

10. A method according to any of the preceding claims, **characterized by** dividing the faults into a plurality of fault types, combining the values of the extracted features with an information contained within a rule base, outputting a membership degree for each of the fault types, combining the membership degrees to form estimates of fault possibilities for each fault type.

11. A method according to any of the preceding claims, **characterized in that** in computing of the possibilities for different fault types the vibration analysis is completed by utilizing heuristic knowledge, preferably by utilizing fuzzy logic and fuzzy reasoning.

12. A method according to any of the preceding claims, **characterized in that** the overall condition estimate is given by using a limit check for the possibilities in the fault types or classes.

13. A method according to any of the preceding claims, **characterized in that** an automated initialization also for bearings that are damaged.is performed by computing a mean value for the filtered feature values in:all frequency bands and by setting the membership functions of fuzzy rules based on the computed mean values.

14. An arrangement for evaluating condition of a bearing component (5, 5i, 5o), comprising

means (10) for detecting (100) and generating an acceleration signal indicative of vibration in the bearing component (5, 5i, 5o);
converter means for converting the acceleration signal to a digital acceleration signal;
processing means (12) arranged to sample (102) the digital acceleration signal so as to locate parts of the digital acceleration signal resulting from a bearing fault;
processing means (12) arranged to extract (104) predetermined features sensitive to bearing faults from the sampled digital acceleration signal;

a knowledge base (20) containing empiric information of the bearing component and rules for condition analysis; processing means (12) arranged to compute (106) possibilities for different fault types on basis of the extracted features and the information from the knowledge base (20); processing means (12) arranged to form (108) an overall condition estimate of the fault severity on basis of the computed possibilities; and means (14) for outputting (110) the condition estimate, **characterized in that**

the arrangement further includes means for removing the influence of any deterministic signal components from the digital acceleration signal, so as to obtain a signal consisting essentially only of white noise proportienal to overall smoothness of the micro-structure of the bearing surface (5i, 5o) as well as shock pulses sensitive to bearing faults.

15. An arrangement according to claim 14, **characterized in that** said means for removing influence of any deterministic signal components are means for pre-whitening filtering or for performing a similar method that utilizes parametric models of random signals, or by a (Fast) Fourier Transformation, subsequent removal of deterministic peaks and a subsequent inverse (Fast) Fourier Transformation.

16. An arrangement according to claim 14 or 15, **characterized in that** it further comprises filter means for low-pass filtering the extracted features to remove effects of any disturbance and noise from the extracted features.

17. An arrangement according to any of claims 14 to 16, **characterized in that** it comprises knowledge base means (20) including heuristic knowledge which relates values or changes in at least some of the measured quantities or features extracted from the measurements or a combination of such vales or changes to various bearing condition classes.

18. An arrangement according to any of claims 14 to 17, **characterized in that** it further comprises fuzzy logic means for accomplishing fuzzy reasoning for obtaining a linguistic condition estimate.

19. An arrangement according to any of claims 14 to 18, **characterized in that** it further comprises a feed-back connection (15) arranged between the processing means (12) arranged to form the overall condition estimate and a control or power supply unit (2) of the machine including the monitored bearing component (5, 5i, 5o).

**Patentansprüche**

1. Verfahren zum Evaluieren der Bedingung einer Lagerkomponente (5, 5i, 5o), umfassend:

Erzeugen (100) eines Analogbeschleunigungssignals, das indikativ ist in Bezug auf Vibration in der Lagerkomponente (5, 5i, 5o);
Analog/Digital-Wandeln des Beschleunigungssignals in ein Digitalbeschleunigungssignal;
Abtasten (102) des Digitalbeschleunigungssignals, um Teile des Digitalbeschleunigungssignals zu lokalisieren, die aus einem Lagerfehler resultieren;
Extrahieren (104) vorbestimmter als bezüglich Lagerfehlern sensitiv bestimmter Merkmale aus dem abgetasteten Digitalbeschleunigungssignal;
Berechnen (106) von Möglichkeiten für unterschiedliche Fehlertypen basierend auf den extrahierten Merkmalen und in einer Wissensdatenbank (20) eingeschlossener Regeln; und
Bestimmen (108) einer Gesamtbedingungsschätzung der Fehlerschwere basierend auf den berechneten Möglichkeiten für unterschiedliche Fehlertypen,

**dadurch gekennzeichnet, dass**
der Einfluss von irgendeiner deterministischen Signalkomponente von dem Digitalbeschleunigungssignal entfernt wird, um ein Signal zu erhalten, das im Wesentlichen aus weißem Rauschen proportional zu der Gesamtglattheit der Mikrostruktur der Lageroberfläche sowie aus Stoßimpulsen besteht, die empfindlich sind in Bezug auf Lagerfehler.

2. Verfahren nach Anspruch 1, **dadurch gekennzeichnet, dass** der Einfluss von irgendwelchen deterministischen Signalkomponenten mit Hilfe von Vor-Weißmachungsfiltern oder einem ähnlichen Verfahren entfernt werden, welches parametrische Modelle von Zufallssignalen verwendet, oder mit Hilfe von einer (schnellen) Fourier-Transformation, dem Entfernen deterministischer Spitzen und einer darauffolgenden inversen (schnellen) Fourier-Transformation.

3. Verfahren nach einem der vorhergehenden Ansprüche, **dadurch gekennzeichnet, dass** mindestens eines der folgenden Merkmale während der Merkmalsextrahierstufe (104) erfasst wird: scharfe Vibrationsimpulse oder Stoßimpulse, eine Spitze-zu-Spitze-Amplitude des Signals, ein der durchschnittlichen Amplitude ohne Stoßimpulse proportionaler Durchschnittswert, ein Spitzenwertinhalt des Signals.

4. Verfahren nach einem der vorhergehenden Ansprüche, **dadurch gekennzeichnet, dass** eine schmale Form von Schockimpulsen in regelmäßigen Intervallen von einem schmalen Spitzenwert in der Autokorrelationsschätzung einer Signaleinhüllenden erfasst wird.

5. Verfahren nach Anspruch 4, **dadurch gekennzeichnet, dass** der Ort von Impulsspitzenwerten in einer Autokorrelationsschätzung einer Signaleinhüllenden verwendet wird beim,Bestimmen der Fehlerschwere.

6. Verfahren nach einem der vorhergehenden Ansprüche, **dadurch gekennzeichnet, dass** das Abtasten (102) mit einer Abtastfrequenz vorgenommen wird, die mindestens zweimal so hoch ist wie die Frequenz des abzutastenden Digitalsignals.

7. Verfahren nach einem der vorhergehenden Ansprüche, **gekennzeichnet durch** das Aufteilen des Beschleunigungssignals in eine Vielzahl von Frequenzbänder, wobei jedes der Bänder separat überwacht wird.

8. Verfahren nach einem der vorhergehenden Ansprüche, **dadurch gekennzeichnet, dass** die extrahierten Merkmale durch Tiefpassfiltern verarbeitet werden, wodurch Wirkungen von irgendwelchen Störungen und Rauschen aus den extrahierten Merkmalen entfernt werden.

9. Verfahren nach einem der vorhergehenden Ansprüche, **dadurch gekennzeichnet, dass** ein Impulsintervall aus der geometrischen Dimension der Lagerkomponente berechnet wird.

10. Verfahren nach einem der vorhergehenden Ansprüche, **gekennzeichnet durch** Aufteilen der Fehler in eine Vielzahl von Fehlertypen, Kombinieren der Werte der extrahierten Merkmale mit innerhalb einer Regeldatenbank enthaltener Information, Ausgeben eines Mitgliedschaftsgrades für jeden der Fehlertypen, und Kombinieren der Mitgliedschaftsgrade zum Bilden von Schätzungen von Fehlermöglichkeiten für jeden Fehlertyp.

11. Verfahren nach einem der vorhergehenden Ansprüche, **dadurch gekennzeichnet, dass** beim Berechnen der Möglichkeiten für unterschiedliche Fehlertypen die Vibrationsanalyse durch Verwenden heuristischer Kenntnisse, vorzugsweise durch Verwenden von Fuzzy-Logik und Fuzzy-Schlussfolgerung komplettiert wird.

12. Verfahren nach einem der vorhergehenden Ansprüche, **dadurch gekennzeichnet, dass** die Gesamtbedingungsschätzung gegeben wird durch Verwenden einer Grenzwertprüfung für die Möglichkeiten in den Fehlertypen oder -klassen.

13. Verfahren nach einem der vorhergehenden Ansprüche, **dadurch gekennzeichnet, dass** eine automatisierte Initialisierung auch für Lager, die zerstört sind, durch Berechnen eines Durchschnittswerts für die gefilterten Merkmalswert in allen Frequenzbändern und durch Festlegen der Mitgliedschaftsfunktionen von Fuzzy-Regeln basierend auf den berechneten Durchschnittswerten durchgeführt wird.

14. Anordnung zum Evaluieren einer Bedingung einer Lagerkomponente (5, 5i, 5o), umfassend:

eine Einrichtung (10) zum Bestimmen (100) und Erzeugen eines Beschleunigungssignals, das indikativ ist in Bezug auf Vibration in der Lagerkomponente (5, 5i, 5o) ;
eine Umwandlungseinrichtung zum Umwandeln des Beschleunigungssignals in ein Digitalbeschleunigungssignal;
eine Verarbeitungseinrichtung (12), eingerichtet zum Abtasten (102) des Digitalbeschleunigungssignals, um Teile des Digitalbeschleunigungssignals, die von einem Lagerfehler resultieren, zu lokalisieren;
eine Verarbeitungseinrichtung (12), eingerichtet zum Extrahieren (104) vorbestimmter Merkmale, die sensitiv sind in Bezug auf Lagerfehler, von dem abgetasteten Digitalbeschleunigungssignal;
eine Wissensdatenbank (20), die empirische Information in Bezug auf Lagerkomponenten und Regeln für Bedingungsanalysen enthält;

eine Verarbeitungseinrichtung (12), eingerichtet zum Berechnen (106) von Möglichkeiten für unterschiedliche Fehlertypen auf der Basis der extrahierten Merkmale und der Information von der Wissensdatenbank (20);

eine Verarbeitungseinrichtung (12), eingerichtet zum Bilden (108) einer Gesamtbedingungsschätzung der Fehlerschwere auf der Basis der berechneten Möglichkeiten; und

eine Einrichtung (14) zum Ausgeben (110) der Bedingungsschätzung,

**dadurch gekennzeichnet, dass**

die Anordnung ferner eine Einrichtung einschließt zum Entfernen des Einflusses von irgendwelchen deterministischen Signalkomponenten von dem Digitalbeschleunigungssignal, um ein Signal zu erhalten, das im Wesentlichen nur aus weißem Rauschen proportional zur Gesamtglattheit der Mikrostruktur der Lageroberfläche (5i, 5o) sowie aus in Bezug auf Lagerfehler empfindlichen Stoßimpulsen besteht.

15. Anordnung nach Anspruch 14, **dadurch gekennzeichnet, dass** die Einrichtung zum Entfernen des Einflusses irgendwelcher deterministischer Signalkomponenten eine Einrichtung ist zum Vor-Weißmachungsfiltern oder zum Durchführen eines ähnlichen Verfahrens, das parametrische Modelle von Zufallssignalen verwendet, oder durch eine (schnelle) Fourier-Transformation, darauffolgendes Entfernen deterministischer Spitzenwerte und darauffolgende inverse (schnelle) Fourier-Transformation.

16. Anordnung nach Anspruch 14 oder 15, **dadurch gekennzeichnet, dass** sie ferner eine Filtereinrichtung umfasst zum Tiefpassfiltern der extrahierten Merkmale zum Entfernen von Wirkungen irgendwelcher Störung oder irgendwelchen Rauschens von den extrahierten Merkmalen.

17. Anordnung nach einem der Ansprüche 14 bis 16, **dadurch gekennzeichnet, dass** sie eine Wissensdatenbankeinrichtung (20) umfasst, die heuristische Kenntnisse einschließt, welche sich auf Werte der Änderungen in mindestens einigen der gemessenen Größen beziehen oder auf von den Messungen extrahierte Merkmale oder eine Kombination solcher Werte oder Änderungen für verschiedene Lagerbedingungsklassen.

18. Anordnung nach einem der Ansprüche 14 bis 17, **dadurch gekennzeichnet, dass** sie ferner eine Fuzzy- Logikeinrichtung umfasst zum Erlangen einer Fuzzy-Schlussfolgerung zum Erhalten einer linguistischen Bedingungsschätzung.

19. Anordnung nach einem der Ansprüche 14 bis 18, **dadurch gekennzeichnet, dass** sie ferner eine Rückkopplungsverbindung (15) umfasst, die eingerichtet ist zwischen der Verarbeitungseinrichtung (12), die angeordnet ist zum Bilden der Gesamtbedingungsschätzung, und einer Steuerung oder einer Energieversorgungseinheit (2) der die beobachtete Lagerkomponente (5, 5i, 5o) einschließenden Maschine.

**Revendications**

1. Procédé d'évaluation de l'état d'un élément de roulement (5, 5i, 5o), consistant à

générer (100) un signal d'accélération analogique indiquant la vibration dans l'élément de roulement (5, 5i, 5o);

effectuer une conversion A/N du signal d'accélération analogique en un signal d'accélération numérique;

échantillonner (102) le signal d'accélération numérique de sorte à localiser les parties du signal d'accélération numérique qui résultent d'une défaillance de roulement;

extraire (104) des caractéristiques prédéterminées déterminées comme sensibles aux défaillances de roulement du signal d'accélération numérique échantillonné;

calculer (106) les probabilités de différents types de défaillances sur la base des caractéristiques extraites et des règles inclues dans une base de connaissances (20); et

déterminer (108) une estimation d'état global de la gravité de la défaillance sur la base des probabilités calculées de différents types de défaillances,

**caractérisé en ce que**

l'influence de n'importe quelle composante de signal déterministique est éliminée du signal d'accélération numérique, de sorte à obtenir un signal comprenant essentiellement un bruit blanc proportionnel au caractère lisse global de la microstructure de la surface de roulement, ainsi que des impulsions de choc sensibles aux défaillances de roulement.

**2.** Procédé selon la revendication 1, **caractérisé en ce que** l'influence de toutes les composantes de signal déterministiques sont éliminées au moyen d'un filtrage pré-blanchissant ou procédé similaire qui utilise des modèles paramétriques de signaux aléatoires, ou au moyen d'une transformation de Fourier (rapide), d'une élimination de crêtes déterministiques et d'une transformation de Fourier (rapide) inverse consécutive.

**3.** Procédé selon l'une quelconque des revendications précédentes, **caractérisé en ce que** l'au moins une des caractéristiques suivantes est détectée pendant l'étape d'extraction de caractéristiques (104): des impulsions de vibration ou impulsions de choc élevées, une amplitude crête à crête du signal, une valeur moyenne proportionnelle à l'amplitude moyenne sans impulsions de choc, un contenu de crête du signal.

**4.** Procédé selon l'une quelconque des revendications précédentes, **caractérisé en ce qu'**une forme étroite des impulsions de choc à des intervalles réguliers est détectée à partir d'une crête étroite dans l'estimation d'autocorrélation d'une enveloppe de signal.

**5.** Procédé selon la revendication 4, **caractérisé en ce que** l'emplacement des crêtes d'impulsions dans une estimation d'autocorrélation d'une enveloppe de signal est utilisé lors de la détermination de la gravité de la défaillance.

**6.** Procédé selon l'une quelconque des revendications précédentes, **caractérisé en ce que** l'échantillonnage (102) se produit avec une fréquence d'échantillonnage qui est au moins deux fois plus élevée que la fréquence de l'échantillonnage du signal numérique.

**7.** Procédé selon l'une quelconque des revendications précédentes, **caractérisé par** la division du signal d'accélération en une pluralité de bandes de fréquences, chacune des bandes étant surveillée séparément.

**8.** Procédé selon l'une quelconque des revendications précédentes, **caractérisé en ce que** les caractéristiques extraites sont traitées par un filtrage passe-bas, dans lequel les effets de toute perturbation et de tout bruit sont éliminés des caractéristiques extraites.

**9.** Procédé selon l'une quelconque des revendications précédentes, **caractérisé en ce qu'**un intervalle d'impulsions est calculé à partir des dimensions géométriques de l'élément de roulement.

**10.** Procédé selon l'une quelconque des revendications précédentes, **caractérisé par** la division des défaillances en une pluralité de types de défaillances, la combinaison des valeurs des caractéristiques extraites avec une information contenue dans une base de règles, la production d'un degré d'appartenance pour chacun des types de défaillances, la combinaison des degrés d'appartenance pour établir des estimations de probabilités de défaillance pour chaque type de défaillance.

**11.** Procédé selon l'une quelconque des revendications précédentes, **caractérisé en ce que**, lors le calcul des probabilités des différents types de défaillances, l'analyse des vibrations est complétée par l'utilisation d'une connaissance heuristique, de préférence, par l'utilisation d'une logique floue et d'un raisonnement flou.

**12.** Procédé selon l'une quelconque des revendications précédentes, **caractérisé en ce que** l'estimation d'état global est donnée en utilisant un contrôle de limite des probabilités dans les types ou catégories de défaillances.

**13.** Procédé selon l'une quelconque des revendications précédentes, **caractérisé en ce qu'**une initialisation automatique est également effectuée pour les roulements qui sont endommagés en calculant une valeur moyenne pour les valeurs de caractéristiques filtrées dans l'ensemble des bandes de fréquences et en définissant les fonctions d'appartenance de règles floues sur la base des valeurs moyennes calculées.

**14.** Agencement pour évaluer l'état d'un élément roulement (5, 5i, 5o), comprenant

des moyens (10) pour détecter (100) et générer un signal d'accélération analogique indiquant la vibration dans l'élément de roulement (5, 5i, 5o);
des moyens de conversion pour convertir le signal d'accélération en un signal d'accélération numérique;
des moyens de traitement (12) agencés pour échantillonner (102) le signal d'accélération numérique de sorte à localiser les parties du signal d'accélération numérique qui résultent d'une défaillance de roulement;
des moyens de traitement (12) agencés pour extraire (104) des caractéristiques prédéterminées déterminées comme sensibles aux défaillances de roulement du signal d'accélération numérique échantillonné;

une base de connaissances (20) contenant des informations empiriques sur l'élément de roulement et des règles pour l'analyse d'état;

des moyens de traitement (12) agencés pour calculer (106) les probabilités de différents types de défaillances sur la base des caractéristiques extraites et des informations de la base de connaissances (20);

des moyens de traitement (12) agencés pour former (108) une estimation d'état global de la gravité de la défaillance sur la base des probabilités calculées; et

des moyens (14) pour produire (110) l'estimation d'état,

**caractérisé en ce que**

l'agencement comprend en outre des moyens pour éliminer l'influence de n'importe quelle composante de signal déterministique du signal d'accélération numérique, de sorte à obtenir un signal comprenant essentiellement un bruit blanc proportionnel au caractère lisse global de la microstructure de la surface de roulement (5i, 5o), ainsi que des impulsions de choc sensibles aux défaillances de roulement.

15. Agencement selon la revendication 14, **caractérisé en ce que** lesdits moyens pour éliminer l'influence de toute composante de signal déterministique sont des moyens pour effectuer un filtrage de pré-blanchissement ou un procédé similaire qui utilise des modèles paramétriques de signaux aléatoires, ou utilisant une transformation de Fourier (rapide), une élimination de crêtes déterministiques et une transformation de Fourier (rapide) inverse consécutive.

16. Agencement selon la revendication 14 ou 15, **caractérisé en ce qu'**il comprend en outre des moyens de filtrage pour filtrer passe-bas les caractéristiques extraites pour éliminer les effets de toute perturbation et de tout bruit des caractéristiques extraites.

17. Agencement selon l'une quelconque des revendications 14 à 16, **caractérisé en ce qu'**il comprend des moyens de base de connaissances (20) comprenant une connaissance heuristique qui établit un rapport entre les valeurs ou changements dans au moins une des quantités mesurées ou caractéristiques extraites des mesures ou une combinaison de telles valeurs ou changements et diverses catégories d'état de roulement.

18. Agencement selon l'une quelconque des revendications 14 à 17, **caractérisé en ce qu'**il comprend en outre des moyens de logique floue pour accomplir un raisonnement floue pour obtenir une estimation d'état linguistique.

19. Agencement selon l'une quelconque des revendications 14 à 18, **caractérisé en ce qu'**il comprend en outre une connexion d'asservissement (15) agencée entre les moyens de traitement (12) agencés pour établir l'estimation d'état global et une unité de commande ou d'alimentation (2) de la machine comprenant l'élément de roulement contrôlé (5, 5i, 5o).

12    11         10    4    5    1         5i    5o

Data Processing
Device

KB

20

13

14

15    2    3

Fig. 1

Detect and measure acceleration in a bearing component to receive an acceleration signal — 100

Preproces A/D converted acceleration signal in a processing unit by sampling the signal, by prewhitening filtering and by extracting features predefined as sensitive to bearing faults from the digitized acceleration signal — 102

Accomplish a bearing condition evaluation by processing the extracted features — 104

Analyse the possibility of a fault — 106

Compute an estimate of an overall condition estimate and of a need for maintenance — 108

Output the results — 110

# Fig. 2

Fig. 3

Spectral density (1/Hz^2)

Frequency (Hz)

Fig. 4

Autocorrelation value

x = T_fault  2x   3x   Nx   T_rpm

Autocorrelation lag (s)

| Fault class | Possibility |
|-------------|-------------|
| 1 | 15 % |
| 2 | 3% |
| 3 | 14% |
| 4 | 60% |
| 5 | 43% |
| 6 | 22% |

Fig. 6

Fig. 5a

Fig. 5b

Fig. 5c

Fig. 7

d0038a ch:1

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5602761 A

- US 5566092 A

**Non-patent literature cited in the description**

- **MARPLE, S.L. JR.** Digital spectral analysis with applications. Prentice Hall, 1987